(19) Europäisches Patentamt
European Patent Office
Office européen des brevets

(11) **EP 4 157 723 B1**

(12) **FASCICULE DE BREVET EUROPEEN**

(45) Date de publication et mention
de la délivrance du brevet:
**25.10.2023 Bulletin 2023/43**

(21) Numéro de dépôt: **21733205.5**

(22) Date de dépôt: **10.06.2021**

(51) Classification Internationale des Brevets (IPC):
**B64G 1/24** *(2006.01)*     **B64G 1/68** *(2006.01)*

(52) Classification Coopérative des Brevets (CPC):
**B64G 1/242; B64G 1/68**

(86) Numéro de dépôt international:
**PCT/IB2021/055117**

(87) Numéro de publication internationale:
**WO 2021/240487 (02.12.2021 Gazette 2021/48)**

(54) **PROCÉDÉ D'AJUSTEMENT DE TRAJECTOIRE ORBITALE DE SATELLITE**

VERFAHREN ZUR EINSTELLUNG DER UMLAUFBAHN EINES SATELLITEN

METHOD FOR ADJUSTING THE ORBITAL PATH OF A SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2020 FR 2005476**

(43) Date de publication de la demande:
**05.04.2023 Bulletin 2023/14**

(73) Titulaire: **Airbus Defence and Space SAS**
**31402 Toulouse Cedex 4 (FR)**

(72) Inventeurs:
• GEGOUT, Dorian
  **31402 Toulouse cedex 4 (FR)**
• **RENAUD, Frédéric**
  **31402 Toulouse cedex 4 (FR)**

(74) Mandataire: **Ipside**
  **6, Impasse Michel Labrousse**
  **31100 Toulouse (FR)**

(56) Documents cités:
**WO-A2-2013/169309     US-A1- 2008 033 648**

• **ZHANG BINBIN ET AL: "An analytic method of space debris cloud evolution and its collision evaluation for constellation satellites", ADVANCES IN SPACE RESEARCH, ELSEVIER, AMSTERDAM, NL, vol. 58, no. 6, 16 mars 2016 (2016-03-16), pages 903-913, XP029670840, ISSN: 0273-1177, DOI: 10.1016/J.ASR.2016.03.016**

## Description

### Domaine technique de l'invention

La présente invention concerne un procédé d'ajustement de trajectoire orbitale d'un satellite afin de réduire une probabilité de collision du satellite avec un nuage de débris spatiaux. Plus particulièrement, la présente invention concerne un procédé permettant de déterminer une ou plusieurs manoeuvres du satellite en orbite terrestre permettant de réduire la probabilité de collision du satellite avec le nuage de débris orbitaux, c'est-à-dire avec l'ensemble des débris orbitaux du nuage.

### Technique antérieure

Il est connu de l'art antérieur des stratégies d'évitement séquentiel de débris par un satellite basée sur une seule manoeuvre du côté opposé de l'orbite d'un débris. Cette stratégie était adaptée au satellite de propulsion chimique et compte tenu de l'ancienne population de débris suivis.

Le contexte actuel est marqué par une augmentation des projets de méga constellations, où jusqu'à 1000 satellites peuvent être exploités. De plus, le nombre de débris suivis pourrait passer de 20 000 à 100 000 objets lorsque la surface radar détectée du débris passera de 10 centimètres à 5 centimètres. Ces deux phénomènes vont créer des conjonctions multi-débris, où plusieurs morceaux de débris doivent être évités.

Dans le cas d'utilisation de satellites à propulsion électrique, l'évitement des débris spatiaux devient plus complexe que pour les satellites à propulsion chimique. En effet, la faible poussée associée à la propulsion électrique ne permet généralement pas d'effectuer un évitement en une seule manoeuvre.

De plus en raison de la faible poussée associée à la propulsion électrique, les manoeuvres de maintien à poste des satellites sont beaucoup plus fréquentes. Par conséquent, pour éviter de perturber la mission, les manoeuvres de maintien ne peuvent être localisées que sur un emplacement dédié. De cette façon, les manoeuvres de maintien ne seront pas planifiées lorsque le satellite sera demandé à d'autres fins. Enfin, pour éviter que les opérateurs commandent toutes les manoeuvres de maintien, il est essentiel de calculer ces manoeuvres de maintien avec un processus automatique.

À cet effet, les stratégies d'évitement séquentiel de débris par un satellite ne peuvent plus être appliquée.

Les demandes de brevet US 2008/033648 A1 et WO 2013/169309 A2 divulguent un procédé d'ajustement de trajectoire orbitale d'un satellite pour limiter le risque de collision avec un débris spatial. Le document « An analytic method of space debris cloud évolution and its collision évaluation for constellation satellites» de ZHANG BINBIN et al., ADVANCES IN SPACE RESEARCH, ELSEVIER, AMSTERDAM, NL, vol. 58, no. 6, 16 mars 206, divulgue une probabilité globale de collision entre un nuage de débris et une constellation de satellites.

### Présentation de l'invention

La présente invention vise à remédier à ces inconvénients avec une approche totalement novatrice.

A cet effet, selon un premier aspect, la présente invention se rapporte à un procédé d'ajustement de trajectoire orbitale de satellite pour limiter un risque de collision avec un nuage de débris spatiaux, chaque débris comportant une date de plus proche passage avec le satellite, le procédé comportant les étapes de : détermination d'une trajectoire de référence de l'orbite du satellite depuis un instant initial jusqu'à la date de plus proche passage la plus éloignée de l'instant initial; détermination d'une éphéméride de matrice de transition d'état représentative de la trajectoire de référence de l'orbite du satellite; propagation selon l'éphéméride de matrice de transition d'état déterminée d'au moins une première orbite alternative de l'orbite de référence du satellite selon au moins une première manoeuvre d'évitement liée au satellite effectuée durant au moins un créneau horaire libre de manoeuvre, et depuis au moins un instant de manoeuvre du au moins un créneau horaire libre de manoeuvre jusqu'à la date de plus proche passage la plus éloignée de l'instant initial; détermination analytique d'une probabilité individuelle de collision à chaque date de plus proche passage pour chaque débris selon l'au moins une première orbite alternative du satellite; détermination d'au moins une probabilité globale de collision selon l'ensemble des probabilités individuelles de collision déterminées selon l'au moins une première orbite alternative du satellite liée à l'au moins une première manoeuvre d'évitement; sélection d'une au moins première probabilité globale de collision la plus faible parmi l'au moins une probabilité globale obtenue; détermination d'une commande du satellite comportant au moins la première manoeuvre liée à la première probabilité globale de collision la plus faible sélectionnée.

L'invention est mise en oeuvre selon les modes de réalisation et les variantes exposées ci-après, lesquelles sont à considérer individuellement ou selon toute combinaison techniquement opérante.

Avantageusement, la détermination d'une trajectoire de référence de l'orbite du satellite peut être déterminée selon une propagation en dérive libre de l'orbite du satellite.

Avantageusement, l'étape de propagation d'au moins une première orbite alternative, l'étape de détermination analytique d'une probabilité individuelle de collision et l'étape de détermination d'au moins une probabilité globale de collision, peuvent être répétées de manière itérative selon une pluralité de directions de l'au moins une première manoeuvre d'évitement de sorte à obtenir une première pluralité d'orbites alternatives liées à une première pluralité de manoeuvres d'évitement et d'évaluer une première pluralité de probabilités globales de collisions liées à chacune des orbites alternatives liées à la première pluralité de manoeuvres d'évitement.

Avantageusement, chaque manoeuvre d'évitement peut comprendre une valeur initiale de variation de vitesse maximale autorisée durant la manoeuvre d'évitement.

Avantageusement, le procédé peut comprendre une étape précédant l'étape de détermination d'une commande du satellite, comprenant un ajustement de la variation de vitesse de l'au moins une première manoeuvre d'évitement de la commande lorsque l'au moins une première probabilité globale la plus faible sélectionnée précédemment est inférieure à un seuil de probabilité critique de collision, de sorte à obtenir une au moins première probabilité globale de collision la plus proche possible voire égale au seuil de probabilité critique de collision.

Avantageusement, l'étape de propagation d'au moins une première orbite alternative, l'étape de détermination analytique d'une probabilité individuelle de collision et l'étape de détermination d'au moins une probabilité globale de collision, peuvent être répétées selon une pluralité de créneaux libres de manoeuvres du satellite de sorte à obtenir une seconde pluralité d'orbites alternatives et d'évaluer une seconde pluralité de probabilités globales de collisions liée à la seconde pluralité d'orbites alternatives.

Avantageusement, l'étape de détermination d'une commande du satellite peut comprendre une étape de détermination d'au moins une seconde manoeuvre de la commande du satellite, la dite seconde manoeuvre étant combinée à la première manoeuvre liée à la première probabilité globale de collision la plus faible, l'au moins une seconde manoeuvre produisant une seconde orbite alternative permettant le calcul d'une seconde probabilité de collision la plus faible selon l'étape de propagation d'au moins une première orbite alternative, l'étape de détermination analytique d'une probabilité individuelle de collision, l'étape de détermination d'au moins une probabilité globale de collision et l'étape de sélection d'une au moins première probabilité globale de collision la plus faible parmis l'au moins une probabilité globale obtenue.

Avantageusement, la détermination de la seconde manoeuvre de la commande du satellite peut comporter l'étape de détermination d'une trajectoire de référence de l'orbite et l'étape de détermination d'une éphéméride de matrice de transition d'état selon lesquelles la trajectoire de référence du satellite est la trajectoire de la première orbite alternative du satellite liée à la première probabilité globale de collision la plus faible.

Selon un second aspect, la présente invention se rapporte à un produit programme d'ordinateur comprenant des instructions qui, lorsque le programme est exécuté par un ordinateur, conduisent celui-ci à mettre en oeuvre les étapes du procédé décrit ci-dessus.

Selon un troisième aspect, la présente invention se rapporte à un support de stockage d'informations stockant un programme d'ordinateur comprenant des instructions pour implémenter, par un processeur, le procédé décrit ci-dessus, lorsque ledit programme est lu et exécuté par ledit processeur.

**Brève description des figures**

D'autres avantages, buts et caractéristiques de la présente invention ressortent de la description qui suit faite, dans un but explicatif et nullement limitatif, en regard des dessins annexés, dans lesquels :

[fig.1] la figure 1 est une représentation schématique d'une première situation de risque de collision entre un satellite en orbite autour de la Terre et un débris spatial d'un nuage de débris spatiaux.

[fig.2] la figure 2 est une représentation schématique d'une seconde situation de risque de collision entre le satellite en orbite autour de la Terre et un autre débris spatial du nuage de débris spatiaux de la figure 1.

[fig.3] la figure 3 est une représentation schématique d'une expression d'une probabilité globale de collision à partir des probabilités individuelles de collision entre le satellite et l'ensemble du nuage de débris de la figure 1.

[fig.4] la figure 4 est une représentation schématique sous forme de graphe temporelle d'une propagation en dérive libre de l'orbite de référence du satellite depuis un instant initial jusqu'à la date de plus proche passage d'un débris du nuage avec le satellite la plus éloignée de l'instant initial.

[fig.5] la figure 5 est une représentation schématique d'un centre de contrôle du satellite permettant de commander le satellite selon une pluralité de créneaux horaires.

[fig.6] la figure 6 est une représentation schématique temporelle d'une pluralité de créneaux horaires libres de manoeuvre d'évitement dédiés au satellite, chaque créneau horaire libre étant associé à une variation de vitesse orbitale maximale du satellite autorisée durant le créneau horaire libre.

[fig.7] la figure 7 est une représentation schématique de plusieurs exemples d'orbites du satellite déviant de l'orbite de référence Xref suite à des exemples d'opérations de manoeuvre orbitale du satellite.

[fig.8] la figure 8 est une représentation schématique d'un exemple de combinaison de deux manoeuvres orbitales d'évitement associées au satellite.

[fig.9] la figure 9 est une représentation schématique temporelle d'un exemple de multi manoeuvres orbitales du satellite permettant d'obtenir une probabilité globale de collision inférieure à un seuil critique de collision.

[fig.10] la figure 10 est une représentation d'un exemple d'un organigramme du procédé d'ajustement de trajectoire orbitale du satellite.

[fig.11] la figure 11 est une représentation schématique d'un dispositif de mise en oeuvre du procédé d'ajustement de trajectoire orbitale du satellite.

## Description des modes de réalisation

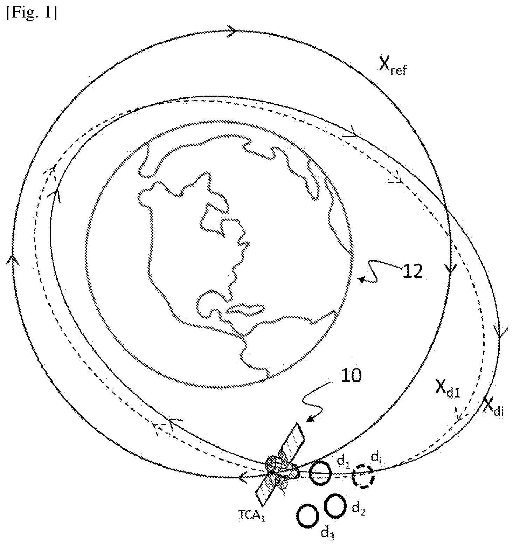

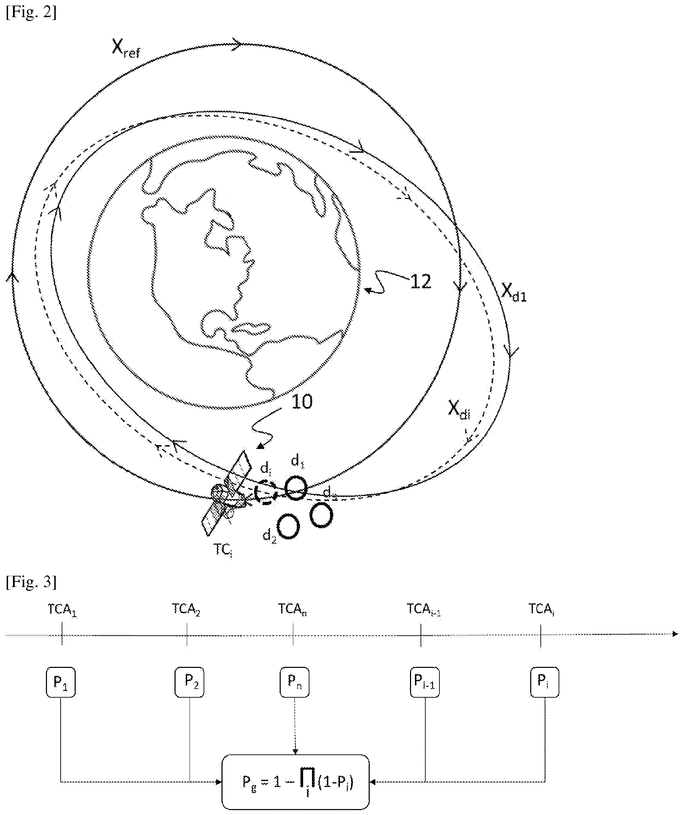

Selon la figure 1 et la figure 2, un satellite 10 en orbite autour de la Terre 12 et un nuage de débris $d_1$, $d_2$, $d_3$, $d_4$, $d_i$ spatiaux comprenant une pluralité i de débris $d_1$, $d_2$, $d_3$, $d_4$, $d_i$ spatiaux en orbite également autour de la Terre 12 sont représentés. Le satellite 10 est en orbite autour de la terre 12 selon son orbite de référence $X_{ref.}$ Chaque débris $d_1$, $d_2$, $d_3$, $d_4$, $d_i$ spatial du nuage de débris comprend sa propre trajectoire orbitale $X_{d1}$, $X_{di}$. Chaque débris $d_1$, $d_2$, $d_3$, $d_4$, $d_i$ spatial est associé à une probabilité $P_1$, $P_i$ individuelle de collision avec le satellite 12, chacune des probabilité $P_1$, $P_i$ individuelle de collision étant évaluée selon une date propre à chaque débris dite date de plus proche passage $TCA_1$, $TCA_i$, c'est-à-dire la date à laquelle la distance entre les trajectoires moyennes du satellite 10 et de chaque débris $d_1$, $d_2$, $d_3$, $d_4$, $d_i$ considéré individuellement est la plus petite.

Il est connu d'évaluer une probabilité $P_i$ individuelle de collision entre un satellite 10 et un unique débris $d_1$ spatial de plusieurs manières selon la thèse présentée et soutenue le dix décembre deux mille quinze par Romain Serra, intitulé « Opérations de proximité en orbite : évaluation du risque de collision et calcul de manoeuvres optimales pour l'évitement et le rendez-vous'», ladite thèse étant publiquement accessible notamment via le site internet « archives-ouvertes.fr » sous la référence tel-01261497. On notera particulièrement qu'une probabilité $P_i$ de collision entre un satellite et un unique débris $d_1$ peut s'évaluer aussi bien selon un calcul d'intégration numérique, que selon une formule analytique sous la forme d'une série convergente à termes positifs.

Selon la figure 3, un procédé d'ajustement de trajectoire orbitale d'un satellite afin de réduire une probabilité de collision du satellite avec un nuage de débris spatiaux comprend la détermination de la probabilité $P_i$ individuelle de collision de chaque débris $d_1$, $d_2$, $d_3$, $d_4$, $d_i$ du nuage avec le satellite 12, chaque probabilité $P_1$, $P_i$ individuelle de collision ayant été évaluée selon sa date de plus proche passage $TCA_1$, $TCA_i$.

A cet effet, le procédé d'ajustement de trajectoire orbitale du satellite 10 nécessite le calcul de la probabilité de collision du satellite 10 avec l'ensemble du nuage de débris $d_1$, $d_2$, $d_3$, $d_4$, $d_i$. Dans la suite de l'exposé, la probabilité de collision du satellite 10 avec le nuage de débris, sera dénommée probabilité globale $P_g$ de collision. La probabilité globale $P_g$ de collision selon l'invention peut être déterminée à partir de toutes les probabilité $P_1$, $P_i$ individuelles de collision préalablement estimées chacune à leur date de plus proche passage $TCA_1$, $TCA_i$. Partant du principe que le calcul de probabilité relatif à une non collision globale du satellite 10 avec le nuage de débris $d_1$, $d_2$, $d_3$, $d_4$, $d_i$ peut être déterminé par la formule suivante : $1 - Pg = \Pi_i(1 - Pi)$ la probabilité globale $P_g$ de collision selon l'invention est déterminée selon la formule :

$$Pg = 1 - \prod_i (1 - Pi)$$

A des fins d'évaluation à une date initiale donnée $t_0$ de la probabilité $P_i$ individuelle de collision entre un satellite 10 et un unique débris $d_1$ spatial, il convient de pouvoir déterminer le plus précisément possible la position orbitale et la covariance de la position orbitale qu'auraient le satellite et l'unique débris à la date de plus proche passage $TCA_1$ selon les données de la position orbitale et de la covariance de la position orbitale du satellite et de l'unique débris à la date initiale $t_0$.

Il conviendra selon l'invention, que les données de positions orbitales et de covariance des positions orbitales des débris $d_1$, $d_2$, $d_3$, $d_4$, $d_i$ du nuage à leur date de plus proche passage $TCA_1$, $TCA_i$ avec le satellite sont des données préalablement connues, fournies par des agences de surveillances des débris dans l'espace telle que par exemple et de manière non limitative, l'organisme américain CSOpC (Combined Space Operations Center), ou encore l'organisme international SDA (The Space Data Association).

Selon l'invention, il convient de déterminer une éphéméride de données permettant de propager une différence d'état, encore appeler éphéméride de matrice de transition d'état, permettant une projection de la position orbitale X(t) et de la covariance Cov de la position orbitale du satellite 10 aux dates de plus proches passages $TC_1$, $TCA_i$.

Plus particulièrement Il est notamment possible de pouvoir propager le mouvement relatif d'un satellite à l'aide d'une matrice de transition d'état.

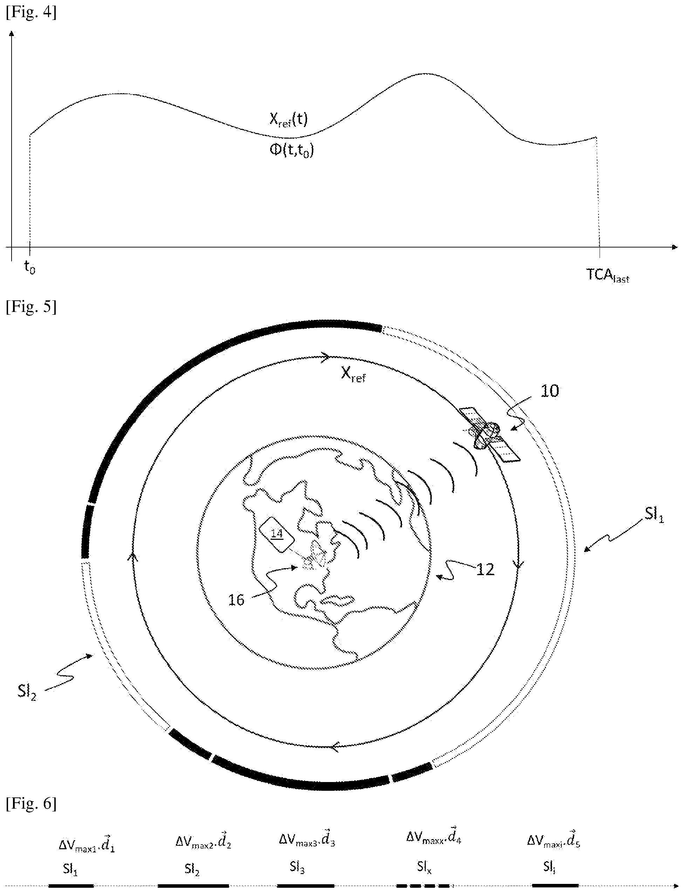

Selon la figure 4, une solution consiste à effectuer une propagation en dérive libre de l'orbite du satellite 10, c'est-à-dire sans manoeuvre du satellite 10, une unique fois à partir de la date initiale $t_0$ de détermination de la probabilité globale $P_g$ de collision jusqu'à la date de plus proche passage $TCA_{last}$ la plus éloignée de la date initiale $t_0$ d'un débris $d_1$, $d_2$, $d_3$, $d_4$, $d_i$ du nuage. A cet égard, deux éphémérides sont déterminées, à savoir une éphéméride de l'orbite de référence $X_{ref}$ du satellite 10 et une éphéméride de la matrice de transition d'état $\phi(t, t_0)$ correspondant à la trajectoire l'orbite de référence $X_{ref}$. Cette détermination permet notament de calculer toutes les matrices de transition d'état $\phi(t_n, t_m)$ nécessaire au procédé d'ajustement de trajectoire orbitale de satellite.

Selon la figure 5, le premier satellite 10 en orbite autour de la Terre 12 est en communication avec un centre de contrôle 14 du satellite 10 par un moyen de communication radiofréquence 16. Le centre de contrôle 14 du satellite 10 peut être configuré pour commander des manoeuvres de trajectoire orbitale du satellite 10 notamment en commandant des poussées du satellite 10 selon une variation de la vitesse orbitale $\Delta V$ du satellite 10 dans une direction $\vec{d}$ de la poussée. Selon la figure 5, un exemple d'une période de révolution du satellite 10 autour de la terre, aussi appelée période orbitale du satellite 10 autour de la Terre 12, est représenté de façon schématique par un cercle discontinu formé par plusieurs arcs de cercle. Chaque arc de cercle représente un créneau horaire pouvant être dédié à une opération du satellite 10. A titre d'exemple non limitatif, et selon la figure 5, la période orbitale du satellite 10 peut comprendre deux créneaux horaires prévus pour une opération de charge d'une batterie d'alimentation électrique du satellite 10, deux autres créneaux horaires prévus pour corriger si nécessaire l'attitude du satellite 10, un autre créneau horaire prévu pour une mission de photographie de la Terre 12 et enfin deux autres créneaux horaires disponibles pour tout autres opérations du satellite. Dans la suite de l'exposé, on nommera les créneaux horaires disponibles comme créneaux libres $SI_1$, $SI_2$ de manoeuvre.

Selon l'invention, le procédé d'ajustement de trajectoire orbitale du satellite 10 consiste à déterminer la ou les manoeuvres nécessaires à commander au satellite 10 durant le ou les créneaux libres $SI_i$, pour éviter simultanément tous les débris $d_1$, $d_2$, $d_3$, $d_4$, $d_i$ du nuage lorsque la probabilité globale initiale $P_{g0}$ de collision du satellite 10 avec le nuage de débris $d_1$, $d_2$, $d_3$, $d_4$, $d_i$ est supérieure à un seuil de probabilité critique $P_{th}$ de collision ; la probabilité globale initiale $P_{g0}$ de collision du satellite 10 étant déterminée selon l'orbite de référence $X_{ref}$ du satellite 10.

Selon l'invention, de manière générale, le terme créneau horaire peut comprendre simplement une date ponctuelle à laquelle il est possible de commander une manoeuvre d'ajustement de trajectoire orbitale du satellite 10.

L'état de l'art connu permettant la détermination d'une ou plusieurs manoeuvres d'évitement d'un seul débris à la fois n'est pas envisageable. En effet, dans le contexte d'évitement d'un nuage de débris $d_1$, $d_2$, $d_3$, $d_4$, $d_i$ il n'est pas envisageable de déterminer un manoeuvre d'évitement d'un premier débris $d_1$ du nuage sans prendre en compte les autres débris $d_2$, $d_3$, $d_4$, $d_i$ du nuage. De plus, le temps de calcul de manoeuvre d'évitement cumulé pour chacun des débris serait trop lourd et pas assez rapide pour l'évitement du nuage de débris $d_1$, $d_2$, $d_3$, $d_4$, $d_i$.

Selon l'invention, une propagation rapide basée sur la matrice de transition d'état $\phi(t, t_0)$ et sur l'éphéméride de l'orbite de référence $X_{ref}$ du satellite 10 permet de calculer l'effet d'une manoeuvre durant l'un quelconque de créneaux libres $SI_1$, $SI_i$ de manoeuvre du satellite 10. Les éphémérides seront utilisées dans le processus d'optimisation afin de tester un grand nombre de directions de poussée possibles afin de calculer l'effet sur la probabilité globale $P_g$ d'une manoeuvre durant l'un quelconque des créneaux libres $SI_1$, $SI_i$ de manoeuvre du satellite 10.

Les éphémérides de l'orbite du satellite 10 peuvent être considérées comme une trajectoire de référence qui ne prend pas en compte la manoeuvre considérée. L'idée de calculer la trajectoire réelle est de modifier cette trajectoire de référence grâce aux éphémérides de la matrice de transition d'état $\Phi(t, t_0)$.

A cet effet, le procédé d'ajustement de trajectoire orbitale du satellite 10 comprend la détermination d'une première manoeuvre $\Delta V . \vec{d}$ et d'un créneau libre $SI_n$ permettant l'exécution de la première manoeuvre $\Delta V$. d de sorte à optimiser au mieux la probabilité globale $P_g$ de collision, c'est-à-dire, de préférence d'obtenir une probabilité globale $P_g$ de collision inférieure ou égale au seuil de probabilité critique $P_{th}$ de collision.

A cet effet, selon la figure 6, chaque créneau libre $SI_1$, $SI_i$ de manoeuvre est associé à une variation de vitesse $\Delta V$ maximale. La variation maximale $\Delta Vmax$ de la vitesse peut être liée par exemple et de manière non limitative soit à la durée du créneau libre $SI_1$, $SI_i$ de manoeuvre, soit à la consommation en énergie maximale du dispositif de propulsion électrique du satellite 10 autorisée pour une manoeuvre. Il conviendra également selon l'invention, qu'une variation minimale de la vitesse du satellite 10 est définie, cette variation minimale étant liée à l'énergie minimale de poussée nécessaire au satellite 10 pour effectuer un changement d'orbite du satellite 10.

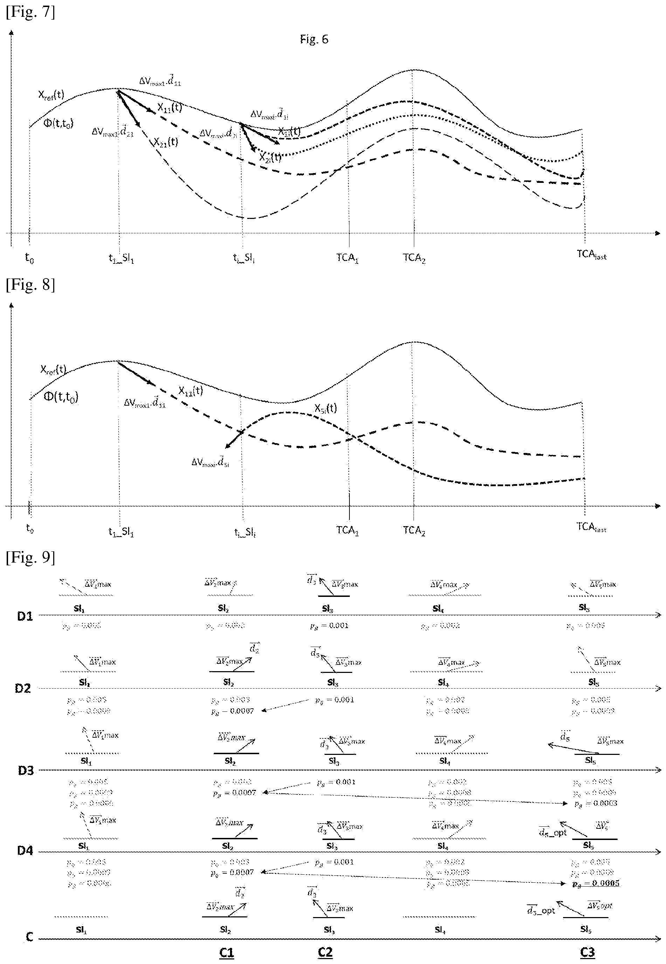

Selon la figure 7, plusieurs exemples d'orbites du satellite 10 déviant de son orbite de référence $X_{ref}$ suite à des opérations de manoeuvre sont représentés. Une première orbite $X_{11}$ d'évitement du satellite 10 déviant de l'orbite de référence $X_{ref}$ est représentée. Ladite première orbite $X_{11}$ d'évitement fait suite à une première manoeuvre $\Delta V_{max1}.\vec{d}_{11}$ d'évitement commandée à un premier instant $t\_SI_1$ de manoeuvre associé au premier créneau libre $SI_1$ de manoeuvre. L'orbite de référence $X_{ref}$ du satellite 10 avant la première manoeuvre $\Delta V_{max1}. \vec{d}_{11}$ à l'instant $t\_SI_1$ de manoeuvre est directement déterminée selon l'orbite de référence $X_{ref}$ déterminée à l'instant $t\_SI_1$ de manoeuvre, et notée $X_{ref}(t\_SI_1)$. Plus particulièrement, cette orbite $X_{ref}(t\_SI_1)$ peut être déterminée en utilisant l'orbite de référence $X_{ref}$ en l'interpolant dans les éphémérides générées.

La détermination de la première orbite $X_{11}(t\_SI_1)$ d'évitement évaluée à l'instant $t\_SI_1$ de manoeuvre suite à la première manoeuvre $\Delta V_{max1}.\vec{d}_{11}$ d'évitement peut être calculée en mettant à jour l'orbite de référence $X_{ref}(t\_SI_1)$ à l'instant $t\_SI_1$ de manoeuvre selon la première manoeuvre $\Delta V_{max1}.\vec{d}_{11}$ d'évitement. Pour les éléments cartésiens, cela correspond à réaliser un incrément de vitesse $\Delta V_{max1}$ avec la direction $\vec{d}_{11}$ de la manoeuvre exprimée dans le repère associé à ces éléments cartésiens. Pour les éléments képlériens, circulaires et équinoctiaux, l'équation de Gauss fournit cet état delta. Dans tous les cas, le calcul de l'écart orbital créé par la première manoeuvre $\Delta V_{max1}.$ à $_{11}$ d'évitement peut s'écrire : $\Delta X_{11}(t\_SI_1) = F(\Delta V_{max1}.\vec{d}_{11}, X_{ref}(t\_SI_1))$. Connaissant les matrices de transition d'état $\phi(TCA_i, t_0)$ et $\phi(t\_SI_1, t_0)$ déterminées précédemment, l'écart orbitale $\Delta X_{11}(TCA_i)$ du satellite 10 à chacune des dates de plus proche passage $TCA_i$ peut être déterminé selon la formule :

$$\Delta X_{11}(TCA_i) = \phi(TCA_i, t\_SI_1). \, \Delta X_{11}(t\_SI_1) = \phi(TCA_i, t_0). \, \phi(t\_SI_1, t_0)^{-1}. \, \Delta X_{11}(t\_SI_1)$$

Afin de pouvoir calculer toutes probabilité individuelle de collision Pi entre le satellite 10 selon sa première orbite $X_{11}$ d'évitement suite à la première manoeuvre $\Delta Vmax_1.\vec{d}_{11}$ d'évitement, et tous les débris $d_1, d_2, d_3, d_4, d_i$ du nuage selon leur date respective de plus proche passage $TCA_i$, il convient de déterminer la première orbite $X_{11}(TCAi)$ d'évitement à chacune desdites dates de plus proche passage $TCA_i$. A cet égard, l'orbite de référence $X_{ref}(TCA_i)$ peut être déterminée à chacune des dates de plus proche passage $TCA_i$ en interpolant cette orbite de référence $X_{ref}(TCA_i)$ dans les éphémérides générées selon chacune des dates de plus proche passage $TCA_i$. Finalement, la première orbite $X_{11}(TCAi)$ d'évitement à chacune desdites dates de plus proche passage $TCA_i$ peut être déterminée selon la formule :

$$X_{11}(TCAi) = X_{ref}(TCA_i) + \Delta X_{11}(TCA_i)$$

Afin de pouvoir calculer toutes probabilité individuelle de collision Pi entre le satellite 10 selon sa première orbite $X_{11}$ d'évitement suite à la première manoeuvre $\Delta Vmax_1.\vec{d}_{11}$ d'évitement, et tous les débris $d_1, d_2, d_3, d_4, d_i$ du nuage selon leur date respective de plus proche passage $TCA_i$, il convient de déterminer la covariance $COV_{TCAi}$ de la position orbitale du satellite à chacune desdites dates de plus proche passage $TCA_i$. Connaissant la matrice de transition d'état $\phi(TCAi, t_0)$ déterminée précédemment, et la covariance $COV_{t0}$ de la position orbitale du satellite 10 à la date initiale $t_0$, la détermination de la covariance $COV_{TCAi}$ projetée à chacune des dates de plus proche passage $TCA_i$ est déterminée par la formule suivante :

$$cov_{TCAi} = \phi(TCAi, \, t_0) \, \times cov_{t_0} \times \, \phi(TCAi, \, t_0)^t$$

La première orbite $X_{11}$ d'évitement du satellite 10 après la première manoeuvre $\Delta Vmax_1.$ à $_{11}$ d'évitement, étant déterminée à chaque date de plus proche passage $TCA_i$, ainsi que la covariance $COV_{TCAi}$ à chaque date de plus proche passage $TCA_i$, l'orbite de chaque débris $d_1, d_2, d_3, d_4, d_i$ et leur covariance à leur date de plus proche passage $TCA_i$ étant également connue, le procédé d'ajustement de trajectoire orbitale du satellite 10 peut comprendre la détermination de toutes les probabilité individuelle de collision Pi entre le satellite 10 selon sa première orbite $X_{11}$ d'évitement suite à la première manoeuvre $\Delta Vmax_1.\vec{d}_{11}$ d'évitement, et tous les débris $d_1, d_2, d_3, d_4, d_i$ du nuage selon leur date respective de plus proche passage $TCA_i$. A cet effet la probabilité globale $P_{g11}$ de collision liée à la première manoeuvre $\Delta V_{max1}.\vec{d}_{11}$ d'évitement effectuée durant le premier créneau libre $SL_1$ de manoeuvre peut être calculée et comparée avec un seuil de probabilité critique $P_{th}$ de collision.

Selon la figure 7, le procédé d'ajustement de trajectoire orbitale du satellite 10 peut comprendre la détermination de la probabilité globale $P_g$ de collision en fonction de différentes directions $\vec{d}$ d'une manoeuvre réalisée lors d'un même créneau libre $SL_1$ de manoeuvre et selon une variation de vitesse orbitale $\Delta V$ donnée du satellite 10. Selon la figure 7, une seconde orbite $X_{21}$ d'évitement du satellite 10 représentant une alternative à la première orbite $X_{11}$ est représentée. Cette seconde orbite, dite seconde orbite $X_{21}$ alternative d'évitement est obtenue après l'application d'une seconde manoeuvre $\Delta Vmax_1.\vec{d}_{21}$ alternative d'évitement différente de la première manoeuvre $\Delta V_{max1}.\vec{d}_{11}$ d'évitement lors du même premier créneau libre $SL_1$ de manoeuvre. Cette dite seconde manoeuvre $\Delta Vmax_1 . \vec{d}_{21}$ alternative d'évitement diffère de la première manoeuvre $\Delta Vmax_1 . \vec{d}_{11}$ d'évitement en ce que la direction $\vec{d}_{21}$ appliquée à la poussée du satellite 10 selon la même variation de vitesse orbitale $\Delta Vmax_1$ diffère de la première direction $\vec{d}_{11}$. A cet égard, une seconde orbite $X_{21}(TCA_i)$ alternative d'évitement du satellite 10 à tous les dates de passages le plus proche $TCA_i$ est également déterminée de manière identique à celle décrite pour la première orbite $X_{11}(TCA_i)$ d'évitement. Connaissant également la covariance $COV_{TCAi}$ pour chacune des dates de passages le plus proche $TCA_i$, une seconde probabilité globale $P_{g12}$ de collision alternative liée à la seconde manoeuvre $\Delta Vmax_1 . \vec{d}_{21}$ alternative d'évitement effectuée durant le premier créneau libre $SI_1$ de manoeuvre peut être calculée et comparée avec le seuil de probabilité critique $P_{th}$ de collision et également avec la probabilité globale $P_{g11}$ de collision liée à la première manoeuvre $\Delta Vmax_1 . \vec{d}_{11}$ d'évitement effectuée durant le premier créneau libre $SI_1$ de manoeuvre.

Selon la figure 7, le procédé d'ajustement de trajectoire orbitale du satellite 10 peut comprendre la détermination d'une probabilité globale $P_g$ de collision en fonction du positionnement dans le temps d'une manoeuvre $\Delta V \vec{d}$. En d'autres termes, la probabilité globale $P_g$ de collision est fonction également du créneau libre $SI_1$, $SI_i$ de manoeuvre durant lequel une manoeuvre est effectuée. Selon la figure 7, une troisième manœuvre $\Delta Vmax_i . \vec{d}_{1i}$ alternative d'évitement effectuée durant un quelconque des créneaux libres $SI_i$ distinct du premier créneau libre $SI_1$ de manoeuvre est représentée. A cet effet, une troisième orbite $X_{11}(TCA_i)$ alternative d'évitement du satellite 10 propre à chacune des dates de passages le plus proche $TCA_i$ est également déterminée de manière identique à celle décrite pour la première orbite $X_{11}(TCA_i)$ d'évitement. Connaissant également la covariance $COV_{TCAi}$ pour chacune des dates de passages le plus proche $TCA_i$, une troisième probabilité globale $P_{gli}$ de collision alternative associée à la troisième manoeuvre $\Delta Vmax_i . \vec{d}_{1i}$ alternative d'évitement effectuée durant ledit quelconque des créneaux libres $SI_i$ distinct du premier créneau libre $SI_1$ de manoeuvre peut être déterminée et comparée avec le seuil de probabilité critique $P_{th}$ de collision et également avec la probabilité globale $P_g$ de collision la plus faible déterminée durant le premier créneau libre $SI_1$ de manoeuvre

De la même manière que précédemment décrit, le procédé d'ajustement de trajectoire orbitale du satellite 10 peut comprendre la détermination de la probabilité globale $P_g$ de collision en fonction de différentes directions à $\vec{d}$ d'une manoeuvre réalisée lors d'un quelconque créneau libre $SI_i$ et selon une variation de vitesse orbitale $\Delta V$ donnée du satellite 10. Selon la figure 7, une quatrième orbite $X_{2i}$ alternative d'évitement du satellite 10 déviant de l'orbite de référence Xref à l'instant t_Sli de manoeuvre représentant une alternative de la troisième orbite $X_{1i}$ alternative d'évitement précédemment décrite est représentée. Cette quatrième orbite $X_{2i}$ alternative d'évitement est obtenue après l'application d'une quatrième manoeuvre $\Delta Vmax_i . \vec{d}_{2i}$ alternative d'évitement différente de la troisième manoeuvre $\Delta Vmax_i . \vec{d}_{1i}$ alternative d'évitement associée à la troisième orbite $X_{1i}$ alternative d'évitement précédemment décrite. Cette dite quatrième manoeuvre $\Delta Vmax_i . \vec{d}_{2i}$ alternative d'évitement diffère de la troisième manoeuvre $\Delta Vmax_i . \vec{d}_{1i}$ alternative d'évitement en ce que la direction $\vec{d}_{2i}$ appliquée à la poussée du satellite 10 selon la même variation de vitesse orbitale $\Delta V_{maxi}$ diffère de la direction $\vec{d}_{1i}$ de la troisième manoeuvre $\Delta Vmax_i . \vec{d}_{1i}$ alternative d'évitement. A cet égard, une quatrième orbite $X_{2i}(TCA_i)$ alternative d'évitement du satellite 10 liée à la quatrième manoeuvre $\Delta Vmax_i . \vec{d}_{1i}$ alternative d'évitement est également déterminée à tous les dates de passages le plus proche $TCA_i$ de manière identique à celle décrite pour la première orbite $X_{11}(TCA_i)$ d'évitement. Connaissant également la covariance $COV_{TCAi}$ pour chacune des dates de passages le plus proche $TCA_i$, une quatrième probabilité globale $P_{g2i}$ de collision alternative liée à la quatrième manoeuvre $\Delta Vmax_i . \vec{d}_{2i}$ alternative d'évitement effectuée durant ledit quelconque des créneaux libres $SI_i$ distinct du premier créneau libre $SI_1$ de manoeuvre peut être calculée et comparée avec le seuil de probabilité critique $P_{th}$ de collision et également avec la troisième probabilité globale $P_{g11}$ de collision alternative liée à la troisième manoeuvre $\Delta Vmax_i . \vec{d}_{1i}$ alternative d'évitement effectuée durant le même créneau libre $SI_i$

Selon la détermination d'une ou plusieurs probabilités globales $P_g$ de collision telle que décrite à la figure 7, dans l'hypothèse selon laquelle au moins une des probabilités globales $P_g$ de collision déterminée serait inférieure ou égale au seuil de probabilité critique $P_{th}$ de collision, alors une seule manoeuvre $\Delta Vmax . \vec{d}$ d'évitement effectuée durant un seul créneau libre $SI_i$ permettrait un évitement de collision du satellite 10 avec l'ensemble des débris $d_1$, $d_2$, $d_3$, $d_4$, $d_i$ du nuage. Selon cette hypothèse, plusieurs stratégies de procédé d'ajustement de trajectoire orbitale du satellite 10 sont possibles.

Une première stratégie peut consister à déterminer la première manoeuvre $\Delta V . \vec{d}$ permettant l'évitement de la collision, c'est-à-dire la manoeuvre $\Delta V . \vec{d}$ d'évitement pour laquelle la probabilité globale $P_g$ de collision associée à cette manoeuvre, et donc au créneau libre $SI_i$ associé à la manoeuvre, est inférieure ou égale au seuil de probabilité critique

$P_{th}$ de collision. Afin de déterminer la manoeuvre $\Delta V . \vec{d}$ d'évitement de collision, il conviendra par exemple de fixer d'abord un paramètre de variation de vitesse orbitale $\Delta V$ du satellite 10, par exemple et de manière préférentielle selon sa valeur maximale $\Delta V_{maxi}$ autorisée durant le créneau libre $SI_i$ considéré et de faire varier la direction $\vec{d}$ de la manoeuvre. Cette opération se répète sur tous les créneaux jusqu'à l'obtention d'une manoeuvre $\Delta Vmax_i . \vec{d}$ permettant l'obtention d'une probabilité globale inférieure ou égale au seuil de probabilité critique $P_{th}$ de collision. Le choix de la valeur maximale $\Delta V_{maxi}$ autorisée de variation de vitesse orbitale est un choix relativement pertinent permettant d'obtenir une probabilité globale Pg plus faible qu'avec des variations de vitesse $\Delta V$ orbitale inférieures à la variation maximale $\Delta Vmax_i$.

Dans le cas d'une probabilité $P_g$ globale obtenue strictement inférieure au seuil de probabilité critique $P_{th}$ de collision, une réduction de la variation de vitesse maximum $\Delta V_{max}$ est possible afin d'obtenir une probabilité globale $P_g$ de collision de préférence égale, voir très proche, du seuil de probabilité critique $P_{th}$ de collision. De cette façon, l'énergie nécessaire à la manoeuvre identifiée sera réduite au minimum.

Il conviendra selon l'invention, que la détermination d'une variation de vitesse orbitale $\Delta V$ combinée à une détermination de direction $\vec{d}$ de manoeuvre peut être effectuée, par exemple et de manière non limitative, par des algorithmes de dichotomie ou des méthodes de Brent. Il conviendra de noter qu'une variation de vitesse $\Delta V$ peut être associée à une direction $\vec{d}$ de manoeuvre optimale.

Une seconde stratégie peut consister à déterminer, sur un créneau libre considéré $SI_i$, la manoeuvre $\Delta V \vec{d}$ d'évitement permettant la plus faible probabilité globale $P_g$ de collision en fonction de l'ensemble des directions $\vec{d}$ de manoeuvres possibles, la variation de vitesse orbitale $\Delta V$ de la manoeuvre étant également de préférence fixée à la variation de vitesse maximale $\Delta V_{maxi}$ autorisée sur le créneau libre $SI_i$ considéré. Si le créneau libre considéré $SI_i$ ne permet pas d'obtenir une probabilité globale $P_g$ inférieure ou égale au seuil de probabilité critique $P_{th}$ de collision, il conviendra de recommencer la détermination sur un autre créneau libre Sli. Dans le cas où cet autre créneau libre Sli permet une probabilité globale $P_g$ inférieure au seuil de probabilité critique $P_{th}$ de collision une réduction de la variation de vitesse orbitale maximum $\Delta V_{max}$ de la manoeuvre $\Delta V_{max} \vec{d}$ déterminée est possible afin d'obtenir une probabilité globale $P_g$ de collision de préférence égale, voire très proche, du seuil de probabilité critique $P_{th}$ de collision.

Une troisième stratégie peut consister à déterminer sur l'ensemble des créneau libres identifiés $SI_i$ au préalable, la manoeuvre $\Delta V \vec{d}$ d'évitement permettant la plus faible probabilité globale $P_g$ de collision en fonction de l'ensemble des directions $\vec{d}$ de manoeuvres possibles pour chaque créneau libre Sli, la variation de vitesse orbitale $\Delta V$ de la manoeuvre étant également de préférence fixée à la variation de vitesse maximale $\Delta V_{maxi}$ autorisée pour chaque créneau libre $SI_i$. De même que pour la première stratégie, dans le cas où la manoeuvre $\Delta V \vec{d}$ d'évitement identifiée permet une probabilité globale $P_g$ inférieure au seuil de probabilité critique $P_{th}$ de collision, une réduction de la variation de vitesse orbitale maximum $\Delta V_{max}$ de la manoeuvre $\Delta V_{max} \vec{d}$ déterminée est possible afin d'obtenir une probabilité globale $P_g$ de collision de préférence égale, voire très proche, du seuil de probabilité critique $P_{th}$ de collision.

Il est bien entendu que d'autres stratégies de détermination d'une manoeuvre $\Delta V$ d d'évitement de collision selon la description de la figure 7 sont possibles, de sorte que l'invention ne se limite pas aux trois exemples de stratégie d'évitement de collision précédemment décrites.

Selon l'invention, il est également probable qu'une seule manoeuvre $\Delta V$ d d'évitement ne puisse pas être suffisante pour éviter une collision entre le satellite 10 et l'ensemble des débris du nuage. En d'autres termes, il est également probable, selon l'invention, qu'une seule manoeuvre $\Delta V \vec{d}$ ne permette pas d'obtenir une probabilité globale $P_g$ de collision inférieure ou égale au seuil de probabilité critique $P_{th}$ de collision.

A cet effet, selon la figure 8, une première manoeuvre $\Delta Vmax_1 . \vec{d}_{11}$ d'évitement et une seconde manoeuvre $\Delta Vmax_i . \vec{d}_{5i}$ d'évitement du satellite 10 suivant la première manoeuvre $\Delta Vmax1 . \vec{d}_{11}$ d'évitement sont représentées, la combinaison de la première manoeuvre $\Delta Vmax_1 . \vec{d}_{11}$ d'évitement avec la seconde manoeuvre $\Delta Vmax_i . \vec{d}_{5i}$ d'évitement permettant l'évitement de la collision du satellite 10 avec les débris $d_1$, $d_2$, $d_3$, $d_4$, $d_i$ du nuage. Plus particulièrement, la première manoeuvre $\Delta Vmax_1 . \vec{d}_{11}$ d'évitement représentée est la première manoeuvre $\Delta Vmax_1 . \vec{d}_{11}$ d'évitement représentée à la figure 7 pour laquelle une première orbite $X_{11}$ d'évitement déviant de l'orbite de référence $X_{ref}$ a été déterminée. Il conviendra de prendre l'hypothèse que de toutes les manoeuvres $\Delta V . d$ estimées conformément à la description de la figure 7, la première manoeuvre $\Delta Vmax_1 . \vec{d}_{11}$ d'évitement commandée au premier instant $t\_SI_1$ de manoeuvre associé au premier créneau libre $SI_1$ de manoeuvre a été identifiée comme la manoeuvre $\Delta Vmax_1 . \vec{d}_{11}$ d'évitement permettant d'obtenir la probabilité globale $P_{g11}$ de collision la plus faible en comparaison avec la détermination de toutes les autres probabilités globales $P_g$ de collision estimées associées aux alternatives de manoeuvres $\Delta V . \vec{d}$ effectuées depuis l'orbite de référence $X_{ref}$ telles que décrites à la figure 7. Il conviendra également de supposer selon la figure 8 que la probabilité globale $P_{g11}$ de collision liée à ladite première manoeuvre $\Delta Vmax_1 . \vec{d}_{11}$ d'évitement est supérieure au seuil de probabilité

critique $P_{thr}$ de collision. A cet effet, il est nécessaire de déterminer au moins une seconde manoeuvre $\Delta Vmax_i . \vec{d}_{5i}$ d'évitement du satellite 10 faisant suite à la première manoeuvre $\Delta V_{max1} . \vec{d}_{11}$ d'évitement de sorte à réduire la probabilité globale $P_g$ de collision avec l'objectif d'obtenir au final une probabilité globale $P_g$ de collision au moins égale, voire inférieure au seuil de probabilité critique $P_{thr}$ de collision. Il conviendra de nommer cette seconde manoeuvre comme seconde manoeuvre $\Delta Vmax_i . \vec{d}_{5i}$ d'évitement dans la suite de la description de l'invention.

Selon la figure 8, une seconde orbite $X_{5i}$ d'évitement dans la continuité de la première orbite $X_{11}$ d'évitement est représentée. Cette seconde orbite $X_{5i}$, dite seconde orbite $X_{5i}$ d'évitement, fait suite à la seconde manoeuvre $\Delta Vmax_i . \vec{d}_{5i}$ d'évitement commandée à l'un quelconque des créneaux libres $Sl_i$ distinct du premier créneau libre $Sl_i$ de manoeuvre. La première orbite $X_{11}$ d'évitement du satellite 10 à l'instant $t\_Sl_i$ de manoeuvre avant la seconde manoeuvre $\Delta Vmax_i . \vec{d}_{5i}$ d'évitement est directement déterminée, puisqu'elle a été précédemment déterminée selon la description de la figure 7. La première orbite $X_{11}$ d'évitement du satellite 10 à l'instant $t\_Sl_i$ de manoeuvre avant la seconde manoeuvre $\Delta Vmax_i . \vec{d}_{5i}$ d' évitement est notée $X_{11}(t\_Sl_i)$.

La détermination de la seconde orbite $X_{5i}(t\_Sl_i)$ d'évitement évaluée à l'instant $t\_Sl_i$ de manoeuvre suite à la seconde manoeuvre $\Delta Vmax_i . \vec{d}_{5i}$ d'évitement peut être calculée en mettant à jour la première orbite $X_{11}(t\_Sl_i)$ à l'instant $t\_Sl_i$ de manoeuvre selon la seconde manoeuvre $\Delta Vmax_i . \vec{d}_{5i}$ d'évitement. Pour les éléments cartésiens, cela correspond à la seconde manoeuvre $\Delta Vmax_i . \vec{d}_{5i}$ d'évitement dans le référentiel inertiel. Pour les éléments képlériens, circulaires et équinoctiaux, l'équation de Gauss fournit cet état delta. Dans tous les cas, le calcul de l'écart orbital créé par la seconde manoeuvre $\Delta Vmax_i . \vec{d}_{5i}$ d'évitement peut s'écrire: $\Delta X_{5i}(t\_Sl_i) = F(\Delta Vmax_i . \vec{d}_{5i}, X_{11}(t\_Sl_i))$. De la même manière que celle décrite à la figure 4, considérant que la première orbite $X_{11}$ est une nouvelle orbite de référence relativement à la seconde manoeuvre $\Delta Vmax_i . \vec{d}_{5i}$ d'évitement, l'écart orbitale $\Delta X_{5i}(TCA_i)$ du satellite 10 à chacune des dates de plus proche passage $TCA_i$ peut être déterminée selon la formule :

$$\Delta X_{5i}(TCA_i) = \phi(TCA_i, t\_Sl_i). \Delta X_{5i}(t\_Sl_i) = \phi(TCA_i, t\_Sl_1). \phi(t\_Sl_i, t\_Sl_1)^{-1}. \Delta X_{5i}(t\_Sl_i)$$

Afin de pouvoir calculer toutes probabilité individuelle de collision Pi entre le satellite 10 selon sa seconde orbite $X_{5i}(t\_Sl_i)$ d'évitement suite à la seconde manoeuvre $\Delta Vmax_i . \vec{d}_{5i}$ d'évitement, et tous les débris $d_1, d_2, d_3, d_4, d_i$ du nuage selon leur date respective de plus proche passage $TCA_i$, il convient de déterminer la seconde orbite $X_{5i}(t\_Sl_i)$ d'évitement à chacune desdites dates de plus proche passage $TCA_i$. A cet égard, la première orbite $X_{11}(TCA_i)$ d'évitement peut être déterminée à chacune des dates de plus proche passage $TCA_i$ en interpolant cette première orbite $X_{11}(TCA_i)$ d'évitement dans les éphémérides générées selon chacune des dates de plus proche passage $TCA_i$. Finalement, la seconde orbite $X_{5i}(t\_Sl_i)$ d'évitement peut être déterminée à chacune desdites dates de plus proche passage $TCA_i$ selon la formule :

$$X_{5i}(TCAi) = X_{11}(TCA_i) + \Delta X_{5i}(TCA_i)$$

La seconde orbite $X_{5i}$ d'évitement du satellite 10 après la seconde manoeuvre $\Delta V_{maxi} . \vec{d}_{5i}$ d'évitement ainsi que la covariance $COV_{TCAi}$ orbitale du satellite 10 étant déterminées à chaque date de plus proche passage $TCA_i$, l'orbite de chaque débris $d_1, d_2, d_3, d_4, d_i$ et leur covariance à leur date de plus proche passage $TCA_i$ étant également connues, le procédé d'ajustement de trajectoire orbitale du satellite 10 peut comprendre la détermination de toutes les probabilité individuelle de collision Pi entre le satellite 10 selon sa seconde orbite $X_{5i}$ consécutive suite à la seconde manoeuvre $\Delta Vmax_i . \vec{d}_{5i}$ d'évitement, et tous les débris $d_1, d_2, d_3, d_4, d_i$ du nuage selon leur date respective de plus proche passage $TCA_i$. A cet effet la probabilité globale $P_{g5i}$ de collision liée à la seconde manoeuvre $\Delta Vmax_i . \vec{d}_{5i}$ d'évitement effectuée durant ledit quelconque des créneaux libres $Sl_i$ distinct du premier créneau $Sl_1$ de manoeuvre peut être calculée et comparée avec un seuil de probabilité critique $P_{th}$ de collision.

De la même manière qu'à la figure 7, le procédé d'ajustement de trajectoire orbitale du satellite 10 peut comprendre la détermination d'une pluralité d'autres probabilités globales $P_g$ de collision selon une pluralité d'autres secondes manoeuvres $\Delta V . \vec{d}$ alternatives d'évitement en combinaison avec la première manoeuvre $\Delta V_{max1} . \vec{d}_{11}$ d'évitement représentants chacune une alternative de la seconde manoeuvre $\Delta Vmax_i . \vec{d}_{5i}$ d'évitement représentée à la figure 8 ; ces autres secondes manoeuvres $\Delta V . d$ alternatives d'évitement étant selon un autre créneau libre $Sl_i$ d'exécution de

manoeuvre et/ou selon une autre direction $\vec{d}$ de manoeuvre que la seconde manoeuvre $\Delta Vmax_i$. $\vec{d}_{5i}$ d'évitement telle que représentée à la figure 8. Chacune des probabilités globales $P_g$ de collision liée chacune à une des autres secondes manoeuvres $\Delta V$. $\vec{d}$ alternatives d'évitement peut être comparée avec le seuil de probabilité critique $P_{th}$ de collision et avec toutes les autres probabilités globales $P_g$ de collision liées aux autres secondes manoeuvres $\Delta V$. $\vec{d}$ d'évitement.

A cet effet, selon la figure 8, dans l'hypothèse d'au moins une probabilité globale $P_g$ de collision, liée à une seconde manoeuvre $\Delta V$. $\grave{a}$ d'évitement inférieure ou égale au seuil de probabilité critique $P_{th}$ de collision, il conviendra selon l'invention et de manière non limitative, de pouvoir déterminer la seconde manoeuvre $\Delta V$. $\vec{d}$ d'évitement permettant l'évitement de la collision du satellite 10 avec l'ensemble des débris $d_1$, $d_2$, $d_3$, $d_4$, $d_i$ du nuage selon au moins l'une des trois stratégies de procédé d'ajustement de trajectoire orbitale du satellite 10 similaires au trois stratégies décrites aux paragraphes précédents relatifs à la figure 7.

Dans le cas d'une probabilité $P_g$ globale strictement inférieure au seuil de probabilité critique $P_{th}$ de collision après l'application de la seconde manoeuvre $\Delta Vmax_i$. $\vec{d}_{5i}$ d'évitement faisant suite à la première manoeuvre $\Delta V_{max1}$. $\vec{d}_{11}$ d'évitement, une réduction de la variation de vitesse maximum $\Delta V_{max}$ est possible afin d'obtenir une probabilité globale $P_g$ de collision de préférence égale, voire très proche, du seuil de probabilité critique $P_{th}$ de collision. De cette façon, l'énergie nécessaire à la seconde manoeuvre $\Delta V$. $\vec{d}$ d'évitement identifiée sera réduite au minimum.

Selon l'invention, et conformément à la description de la figure 7 et de la figure 8, la première manoeuvre d'évitement et la seconde manoeuvre d'évitement peuvent être des manoeuvres effectuées chacune sur l'un quelconque des créneaux libres $SI_i$, le créneau libre $SI_i$ associé à la seconde manoeuvre d'évitement étant distinct de celui associé à la première manoeuvre d'évitement. Plus particulièrement, selon une stratégie à deux manoeuvres d'évitement ou plus, et il est possible, selon le procédé d'ajustement de trajectoire orbitale du satellite 10, de déterminer une seconde manoeuvre d'évitement devant être effectuée sur un créneau libre $SI_i$ antérieure dans le temps au créneau libre $SI_i$ de la première manoeuvre. En d'autres termes, il est possible selon le procédé d'ajustement de trajectoire orbitale du satellite 10 de déterminer une première manoeuvre d'évitement devant être effectuée sur un créneau libre $SI_i$ postérieure dans le temps au créneau libre de la seconde manoeuvre $SI_i$ d'évitement, la dite seconde manoeuvre d'évitement étant déterminée postérieurement à la première manoeuvre.

A cet effet, de manière générale, une première orbite $X_1(t)$ issue d'une première manoeuvre $\Delta Vmax$. $\vec{d}_1$ d'évitement relatif à l'orbite de référence $X_{ref}$, déterminée sur l'un quelconque des créneaux libres $SI_i$, servant de nouvelle orbite de référence relativement à une seconde manoeuvre $\Delta V$. $\vec{d}_2$ d'évitement, doit pouvoir être également évaluée pour le ou les créneaux libres $SI_i$ antérieures au dit l'un quelconque des créneaux libres $SI_i$ associé à la première manoeuvre. A cet effet, et de manière générale, la première orbite $X_i(t\_SI_i<t)$ d'évitement à tous les instants $t\_SI_i$ de manoeuvre relatifs aux créneaux libres antérieurs à la première manoeuvre $\Delta Vmax$. $\vec{d}_1$ d'évitement est déterminée par interpolation des éphémérides liées à l'orbite de référence $X_{ref}$.

A cet effet, il conviendra au procédé d'ajustement de trajectoire orbitale d'un satellite 10 de commander les manoeuvres d'évitement au satellite 10 non pas suivant l'ordre de détermination des manoeuvres d'évitement, mais selon une exécution séquentielle temporelle de manoeuvres selon la localisation temporelle des créneaux libres $SI_i$ associés aux manoeuvres d'évitement de collision déterminées.

Selon la figure 9, un exemple non limitatif d'application d'une stratégie de détermination de créneaux libres $SI_1$, $SI_i$ et de manoeuvres d'évitement nécessaires pour éviter une collision du satellite 10 avec le nuage de débris $d_1$, $d_i$ est représentée. A cet effet, une hypothèse est relative à la mise à disposition de 5 créneaux libres $SI_1$, $SI_2$, $SI_3$, $SI_4$, $SI_5$ de manoeuvre afin de pouvoir réaliser les manoeuvres d'évitements de sorte à obtenir une probabilité globale $P_g$ de collision inférieure ou égale au seuil critique $P_{th}$ de collision. A titre d'exemple non limitatif, le seuil critique $P_{th}$ de collision est fixé à $P_{th} = 0.0005$.

Selon la figure 9, trois lignes représentatives de trois déterminations D1, D2, D3 de trois manoeuvres d'évitements nécessaire à l'évitement de collision entre le satellite 10 et le nuage de débris $d_1$, $d_i$ sont représentées. Une quatrième ligne de détermination D4 représente l'optimisation des paramètres de la troisième manoeuvre, c'est-à-dire la variation de vitesse $\Delta V$ et la direction $\vec{d}$ de la poussée de sorte à obtenir une probabilité globale $P_g$ de collision égale au seuil critique $P_{th}$ de collision, égal à $P_{th} = 0,0005$.

La première détermination D1 consiste à déterminer une première manoeuvre $\Delta V$. $\vec{d}$ d'évitement sur l'un quelconque des cinq créneaux libres $SI_1$, $SI_2$, $SI_3$, $SI_4$, $SI_5$ de manoeuvre permettant d'obtenir une première probabilité globale la plus faible. A cet effet, d'une manière similaire à celle décrite au travers de la figure 7, une pluralité de manoeuvres sur chaque créneau libre, selon chacune une pluralité de directions liées à la poussée de la manoeuvre et selon une variation de vitesse $\Delta V$ maximum liée à chaque créneau libre $SI_1$, $SI_2$, $SI_3$, $SI_4$, $SI_5$ de manoeuvre est évaluée. Selon cette première détermination D1, la première manoeuvre permettant d'obtenir la plus faible première probabilité globale $P_{g1}$ de collision est une des manoeuvres évaluées sur le troisième créneau libre $SI_3$, selon une première direction

$\vec{d}_3$ et selon la variation de vitesse ΔV3max maximale autorisée durant le troisième créneau libre $SI_3$. A titre d'exemple non limitatif, la première probabilité globale $P_{g1}$ de collision obtenue a une valeur égale à $P_{g1}$ = 0,001. Cette valeur de première probabilité globale $P_{g1}$ suite à la première manoeuvre ΔV3max. $\vec{d}_{3\_} = \overline{\Delta V3}$ max d'évitement n'étant pas inférieure ou égale au seuil critique de $P_{th}$ de collision, une seconde manoeuvre d'évitement de collision doit être déterminée.

Selon la figure 9, la seconde détermination D2 consiste à déterminer une seconde manoeuvre ΔV. $\vec{d}$ d'évitement sur l'un quelconque des quatre créneaux libres $SI_1$, $SI_2$, $SI_4$, $SI_5$ de manoeuvre distinct du troisième créneau déjà déterminée pour la première manoeuvre $\overline{\Delta V3}$ max d'évitement permettant d'obtenir une seconde probabilité globale $P_{g2}$ la plus faible en tenant compte de l'effet de la première manoeuvre $\overline{\Delta V3}$ max. A cet effet, d'une manière similaire à celle décrite au travers de la figure 8, une pluralité de manoeuvres d'évitement sur chacun des quatre créneaux libres $SI_1$, $SI_2$, $SI_4$, $SI_5$, de manoeuvre restant à disposition, est évaluée selon une pluralité de directions liées à la poussée de la manoeuvre et selon une variation de vitesse ΔV maximale liée à chaque créneau libre $SI_1$, $SI_2$, $SI_4$, $SI_5$ de manoeuvre restant. Selon cette seconde détermination D2, la seconde manoeuvre d'évitement permettant d'obtenir la plus faible seconde probabilité globale $P_{g2}$ de collision est une des manoeuvres d'évitement évaluées sur le second créneau libre $SI_2$, selon une seconde direction $\vec{d}_2$ et selon la variation de vitesse ΔV2max maximale autorisée durant le second créneau libre $SI_2$. A titre d'exemple non limitatif, la seconde probabilité globale $P_{g2}$ de collision obtenue a une valeur égale à $P_{g2}$ = 0,0007. Cette valeur de seconde probabilité globale $P_{g2}$ suite à la combinaison de la première manoeuvre $\overline{\Delta V3}$ max et de la seconde manoeuvre d'évitement $\overline{\Delta V2}$ max n'étant pas inférieure ou égale au seuil critique de $P_{th}$ de collision, une troisième manoeuvre d'évitement de collision doit être déterminée.

Selon la figure 9, la troisième détermination D3 consiste à déterminer une troisième manoeuvre ΔV. $\vec{d}$ d'évitement sur l'un quelconque des trois créneaux libres $SI_1$, $SI_4$, $SI_5$ de manoeuvre encore disponible, permettant d'obtenir une troisième probabilité globale $P_{g3}$ la plus faible en tenant compte de l'effet combiné de la première manoeuvre $\overline{\Delta V3}$ max d'évitement et de la seconde manoeuvre $\overline{\Delta V2}$ max d'évitement. A cet effet, d'une manière similaire à celle décrite au travers de la figure 8, une pluralité de manoeuvres d'évitement sur chacun des trois créneaux libres $SI_1$, $SI_4$, $SI_5$ de manoeuvre restant à disposition, est évaluée selon une pluralité de directions liées à la poussée de la manoeuvre d'évitement et selon une variation de vitesse ΔV maximum liée à chaque créneau libre $SI_1$, $SI_4$, $SI_5$ de manoeuvre restant. Selon cette troisième détermination D3, la troisième manoeuvre d'évitement permettant d'obtenir la plus faible troisième probabilité globale $P_{g3}$ de collision est une des manoeuvres évaluées sur le cinquième créneau libre $SI_5$, selon une cinquième direction $\vec{d}_5$ et selon une variation de vitesse ΔV5max maximale autorisée durant le cinquième créneau libre $SI_5$. A titre d'exemple non limitatif, la troisième probabilité globale $P_{g3}$ de collision obtenue a une valeur égale à $P_{g2}$ = 0.0003, soit une valeur inférieure au seuil critique de $P_{th}$ de collision.

Selon la figure 9, une quatrième détermination D4 consiste à ajuster les paramètres de la troisième manoeuvre de sorte à obtenir une troisième probabilité globale $P_{g3}$ de collision égale au seuil critique de $P_{th}$ de collision, à savoir $P_{th}$ = 0,0005. A cet égard, une valeur de variation de vitesse ΔV5opt inférieure à la variation de vitesse ΔV5max maximale autorisée, et combinée à une cinquième direction $\vec{d}5\_opt$ optimisée au regard de la variation de vitesse ΔV5opt optimale est obtenue.

Selon la figure 9, une commande C d'évitement de collision du satellite 10 avec l'ensemble des débris $d_1$, $d_i$ du nuage comprend la combinaison des trois manoeuvres $\overline{\Delta V3}$ max, $\overline{\Delta V2}$ max, $\overline{\Delta V5}_{opt}$ d'évitements déterminées effectuées selon un ordre temporelle lié aux trois créneaux libres associés auxdites trois manoeuvre En d'autres termes, la commande C d'évitement de collision comporte une première commande C1 comprenant l'exécution durant le second créneau libre $SI_2$ de la seconde manoeuvre $\overline{\Delta V2}$ max d'évitement déterminée, puis la commande C d'évitement de collision comporte une seconde commande C2 comprenant l'exécution durant le troisième créneau libre $SI_3$ de la première manoeuvre $\overline{\Delta V3}$ max d'évitement déterminée, et enfin, la commande C d'évitement de collision comporte une troisième commande C3 comprenant l'exécution durant le cinquième créneau libre $SI_5$ de la troisième manoeuvre $\overline{\Delta V5}$ opt d'évitement déterminée.

De manière optionnelle, et selon l'invention, afin de confirmer le résultat obtenu, à savoir la détermination de manoeuvres du satellite permettant un évitement de collision entre le satellite et l'ensemble des débris du nuage, de préférence un calcul numérique de la trajectoire du satellite 10 comportant l'ensemble des manoeuvres identifiées peut être effectuée.

En effet, la propagation utilisée à des fin d'évaluation des manoeuvres d'évitement sur la probabilité globale $P_g$ de collision, dite propagation rapide basée sur l'éphéméride de la matrice de transition d'état $\phi(t, t_0)$ et sur l'éphéméride de l'orbite de référence $X_{ref}$ du satellite 10, est une propagation simplifiée. De ce fait, la probabilité globale $P_g$ de collision peut être légèrement différente d'une probabilité globale de collision déterminée selon des déterminations numériques de propagation d'orbites, par exemple et de manière non limitative, à partir des paramètres orbitaux du satellite 10. Pour garantir que cette probabilité globale $P_g$ de collision est proche du seuil de probabilité critique $P_{th}$ de collision, une propagation numérique prenant en compte les manoeuvres précédemment estimées doit être effectuée et la probabilité globale de collision doit être recalculée.

Si toutefois, l'opération de calcul de la probabilité globale $P_g$ de collision basée sur une propagation numérique de l'orbite du satellite 10, comprenant notamment les manoeuvres d'évitements déterminée précédemment aboutissait à une probabilité globale $P_g$ de collision supérieure au seuil de probabilité critique $P_{th}$ de collision, il conviendrait selon l'invention, de reprendre la détermination de manoeuvres d'évitement supplémentaire selon le procédé d'ajustement de trajectoire orbitale du satellite 10 décrit aux figures 7 et 8 à partir d'une nouvelle orbite de référence relative à l'orbite de satellite déterminé numériquement.

Une solution plus simple que celle basée sur une vérification du calcul de la probabilité globale $P_g$ de collision par un calcul numérique de la propagation de l'orbite du satellite corrigée selon les manoeuvres d'évitement déterminées précédemment, consiste simplement à fixer un seuil critique $P_{th}$ de probabilité de collision suffisamment petit afin de pallier aux incertitudes de la solution dite de propagation rapide.

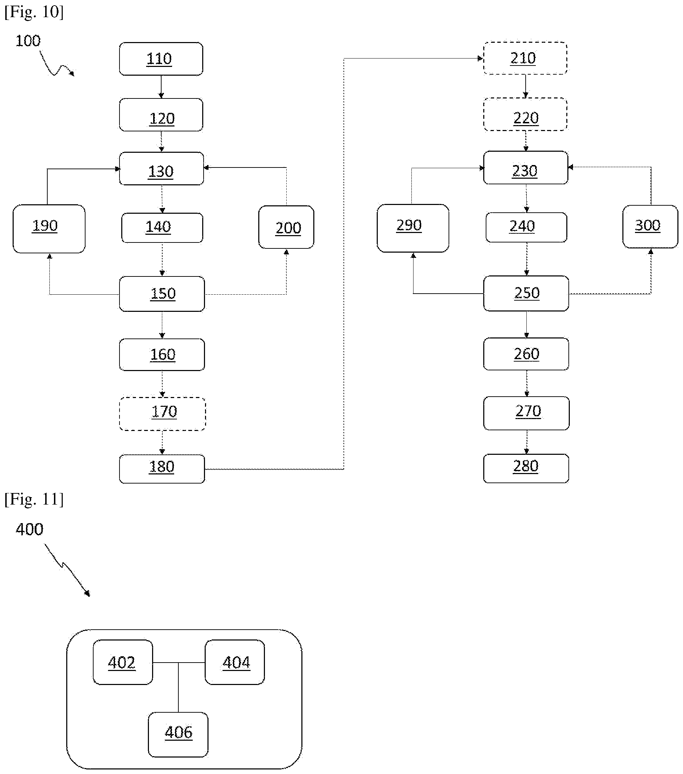

Selon la figure 10 un exemple non limitatif d'organigramme relatif au procédé 100 d'ajustement de trajectoire orbitale du satellite 10 comprend plusieurs étapes.

La première étape consiste en la détermination 110 d'une trajectoire de référence de l'orbite $X_{ref}$ du satellite 10 depuis un instant initial $t_0$ jusqu'à la date de plus proche passage $TCA_1$, $TCA_i$ la plus éloignée de l'instant initial $t_0$. De préférence, selon l'invention, la détermination 110 de la trajectoire de référence de l'orbite $X_{ref}$ du sattelite 10 est déterminée selon une propagation en dérive libre de l'orbite $X_{ref}$ du satellite 10.

La première étape est associée à une seconde étape relative à la détermination 120 d'une éphéméride d'une matrice de transition d'état $\phi(t, t_0)$ représentative de la trajectoire de référence de l'orbite $X_{ref}$ du satellite 10. Cette première étape est essentiel à l'invention. Elle permet notament de calculer toutes les matrices de transition d'état $\phi(t_n, t_m)$ nécessaire au procédé d'ajustement de trajectoire orbitale de satellite.

La matrice de transition d'état $\phi(t, t_0)$ déterminée permet une étape de propagation 130 d'au moins une première orbite $X_{1i}$ alternative de l'orbite de référence $X_{ref}$ du satellite 10 selon au moins une première manoeuvre $\Delta V. \vec{d}$ d'évitement liée au satellite 10 effectuée durant au moins un créneau horaire libre $SI_1$ de manoeuvre, et depuis au moins un instant $t\_SI_1$ de manoeuvre du au moins un créneau horaire libre $SI_1$ de manoeuvre jusqu'à la date de plus proche passage $TCA_i$ la plus éloignée de l'instant initial $t_0$.

La propagation de l'au moins une première orbite $X_{1i}$ alternative du satellite 10 permet une étape de détermination 140 analytique d'une probabilité individuelle $P_i$ de collision à chaque date de plus proche passage $TCA_1$, $TCA_i$ pour chaque débris $d_1$, $d_i$) liée à au moins la première orbite $X_{1i}$ alternative du satellite 10.

Le procédé 100 d'ajustement de trajectoire orbitale du satellite 10, conformément à la description de la figure 3, comprend une étape de détermination 150 d'au moins une probabilité globale $P_g$ de collision selon l'ensemble des probabilités individuelles $P_i$ de collision déterminées selon l'au moins une première orbite $X_{1i}$ alternative du satellite 10 liée à l'au moins une première manoeuvre $\Delta V. \vec{d}$ d'évitement. Cette étape de déte-rination 150 d'au moins une probabilité globale $P_g$ de collision est suivie d'une étape de sélection 160 d'une au moins première probabilité globale $P_g$ de collision la plus faible parmis l'au moins une probabilité globale $P_g$ de collision déterminée.

De préférence, le procédé 100 comprend une étape initiale selon laquelle chaque manoeuvre $\Delta V. \vec{d}$ d'évitement comprend une valeur initiale de variation de vitesse maximale $\Delta V max$ autorisée durant le la manoeuvre $\Delta V. \vec{d}$ d'évitement. Le procédé 100 comprend également de préférence une étape d'ajustement 170 de la variation de vitesse $\Delta V$ de l'au moins une première manoeuvre $\Delta V. \vec{d}$ d'évitement lorsque l'au moins une première probabilité globale $P_g$ la plus faible sélectionnée est inférieure à un seuil de probabilité critique $P_{th}$ de collision, de sorte à obtenir une au moins première probabilité globale $P_g$ de collision la plus proche possible voire égale au seuil de probabilité critique $P_{th}$ de collision. L'ajustement de la variation de vitesse $\Delta V$ peut également être associé à un ajustement de la direction $\vec{d}$ de la manoeuvre.

Le procédé comporte égalemement une étape de détermination 180 d'une commande C du satellite 10 comportant au moins la première manoeuvre liée à la première probabilité globale $P_g$ de collision la plus faible sélectionnée de sorte à minimiser au mieux le risque de collision du sateltte 10 avec le nuage de débris.

De préférence, l'étape de propagation 130 d'orbite alternatives est répétée plusieurs fois par une étape d'itérations 190 mulitples sur la direction $\vec{d}$ de la manoeuvre $\Delta V. \vec{d}$ d'évitement de sorte à obtenir une première pluralité d'orbites $X_{1i}$ alternatives liées à une première pluralité de manoeuvres $\Delta V. \vec{d}$ d'évitement et d'évaluer une première pluralité de probabilités $P_g$ globales de collisions liées à chacune des orbites alternatives liées à la première pluralité de manoeuvres $\Delta V. \vec{d}$ d'évitement.

De préférence, l'étape de propagation 130 d'orbite alternatives est répétée également plusieurs fois par une étape d'itérations 200 mulitples selon une pluralité de créneaux libres $SI_1$, $SI_i$ de manoeuvres du satellite 10 de sorte à obtenir une seconde pluralité d'orbites $X_{1i}$ alternatives et d'évaluer une seconde pluralité de probabilités globales $P_g$ de collisions liées à la seconde pluralité d'orbites $X_{1i}$ alternatives.

Selon la figure 10, l'étape de détermination 180 d'une commande C du satellite 10 peut comprendre une pluralité d'étapes supplémentaires 230, 240, 250, 260, 270, 290, et 300 semblables au étapes précédent l'étape de détermination 180 d'une commande C, permettant de défnir un étape de détermination 280 de la commande C du satellite 10 pour laquelle au moins une seconde manoeuvre d'évitement combinée à la première manoeuvre liée à la première probabilité globale $P_g$ de collision la plus faible est également déterminée. L'au moins une seconde manoeuvre est la seconde manoeuvre liée à une seconde probabilité de collision la plus faible déterminée selon les étapes du procédé 230, 240, 250, 260, 270, 290, et 300

Selon la figure 10, l'étape de détermination 280 de la commande C du satellite 10 pour laquelle au moins une seconde maneouvre d'évitement combinée à la première manoeuvre liée à la première probabilité globale $P_g$ de collision la plus faible est également déterminée, peut comporter les étapes du procédé 210, 220 pour lesquelles la trajectoire de référence du satellite 10 est la trajectoire de la première orbite $X_{1i}$ alternative du satellite 10 liée à la première probabilité globale $P_g$ de collision la plus faible. La trajectoire de la première orbite $X_{1i}$ alternative du satellite 10 a pu être numériquement réévaluée en prenant en compte la première manoeuvre d'évitement. La trajectoire de la première orbite $X_{1i}$ alternative du satellite 10 servira de nouvelle trajectoire de référence, et permettre la génération de nouveaux éphémérides de la matrice de transition d'état $\phi(t, t_0)$.

Selon la figure 11, un dispositif 400 de mise en oeuvre du procédé d'ajustement de trajectoire orbitale du satellite 10 peut comprendre une unité de traitement d'informations 402 de type processeur tel que par exemple et de manière non limitative, un processeur spécialisé dans le traitement du signal, ou encore un micro-contrôleur, ou tout autre type de circuit permettant d'exécuter des instructions de type logicielles. Le dispositif 400 comporte également de la mémoire vive 404 associée à l'unité de traitement d'informations 402. L'unité de traitement d'informations 402 est configurée pour exécuter un programme, dit encore programme d'ordinateur, comprenant des instructions mettant en oeuvre le procédé 100 d'ajustement de trajectoire orbitale d'un satellite 10 décrit précédemment. Les instructions sont chargées dans la mémoire vive du dispositif 400 à partir de tout type de supports de stockage 406 tels que par exemple et de manière non limitative, une mémoire de type non volatile ou une mémoire externe telle qu'une carte mémoire amovible de stockage. Les instructions peuvent être également chargées par l'intermédiaire d'une connexion à un réseau de communication.

Alternativement, le programme d'ordinateur, comprenant des instructions mettant en oeuvre le procédé 100 d'ajustement de trajectoire orbitale du satellite 10 peut également être implémenté sous forme matérielle par une machine ou par un circuit intégré propre à une application ou encore par un circuit électronique de type réseau logique programmable.

**Revendications**

1. Procédé (100) d'ajustement de trajectoire orbitale de satellite (10) pour limiter un risque de collision avec un nuage de débris ($d_1$, $d_i$) spatiaux, chaque débris ($d_1$, $d_i$) comportant une date de plus proche passage ($TCA_1$, $TCA_i$) avec le satellite (10), le procédé (100) comportant les étapes de :

    a. détermination (110) d'une trajectoire de référence de l'orbite ($X_{ref}$) du satellite (10) depuis un instant initial ($t_0$) jusqu'à la date de plus proche passage ($TCA_1$, $TCA_i$) la plus éloignée de l'instant initial ($t_0$);
    b. détermination (120) d'une éphéméride de matrice de transition d'état ($\varphi(t, t_0)$) représentative de la trajectoire de référence de l'orbite ($X_{ref}$) du satellite (10);
    c. propagation (130) selon l'éphéméride de matrice de transition d'état $\varphi(t, t_0)$ déterminée d'au moins une première orbite ($X_{1i}$) alternative de l'orbite de référence ($X_{ref}$) du satellite (10) selon au moins une première manoeuvre ($\Delta V.\vec{d}$) d'évitement liée au satellite (10) effectuée durant au moins un créneau horaire libre de manoeuvre ($SI_1$), et depuis au moins un instant ($t\_SI_1$) de manoeuvre du au moins un créneau horaire libre de manoeuvre ($SI_1$) jusqu'à la date de plus proche passage ($TCA$) la plus éloignée de l'instant initial ($t_0$);
    d. détermination (140) analytique d'une probabilité individuelle ($P_i$) de collision à chaque date de plus proche passage ($TCA_1$, $TCA_i$) pour chaque débris ($d_1$, $d_i$) selon l'au moins une première orbite ($X_{1i}$) alternative du satellite (10) ;
    e. détermination (150) d'au moins une probabilité globale ($P_g$) de collision selon l'ensemble des probabilités individuelles ($P_i$) de collision déterminées selon l'au moins une première orbite ($X_{1i}$) alternative du satellite (10) liée à l'au moins une première manoeuvre ($\Delta V.\vec{d}$) d'évitement;
    f. sélection (160) d'une au moins première probabilité globale ($P_g$) de collision la plus faible parmis l'au moins une probabilité globale ($P_g$) obtenue selon l'étape (e);
    h. détermination (180) d'une commande (C) du satellite (10) comportant au moins la première manoeuvre liée

**EP 4 157 723 B1**

à la première probabilité globale ($P_g$) de collision la plus faible sélectionnée.

2. Procédé (100) selon la revendication 1 où la détermination d'une trajectoire de référence de l'orbite ($X_{ref}$) du satellite (10) est déterminée selon une propagation en dérive libre de l'orbite ($X_{ref}$) du satellite (10).

3. Procédé (100) selon l'une quelconque des revendications précédentes où les étapes (c), (d) et (e) sont répétées de manière itérative (190) selon une pluralité de directions ($\vec{d}$) de l'au moins une première manoeuvre ($\Delta V.\vec{d}$) d'évitement de sorte à obtenir une première pluralité d'orbites ($X_{1i}$) alternatives liées à une première pluralité de manoeuvres ($\Delta V.\vec{d}$) d'évitement et d'évaluer une première pluralité de probabilités ($P_g$) globales de collisions liées à chacune des orbites alternatives liées à la première pluralité de manoeuvres ($\Delta V.\vec{d}$) d'évitement.

4. Procédé (100) selon l'une quelconque des revendications précédentes où chaque manoeuvre ($\Delta V.\vec{d}$) d'évitement comprend une valeur initiale de variation de vitesse maximale ($\Delta Vmax$) autorisée durant la manoeuvre ($\Delta V.\vec{d}$) d'évitement.

5. Procédé (100) selon l'une quelconque des revendications précédentes comportant une étape (g), précédant l'étape (h), comportant un ajustement (170) de la variation de vitesse ($\Delta V$) de l'au moins une première manoeuvre ($\Delta V.\vec{d}$) d'évitement de la commande (C) lorsque l'au moins une première probabilité globale ($P_g$) la plus faible sélectionnée à l'étape (f) est inférieure à un seuil de probabilité critique ($P_{th}$) de collision, de sorte à obtenir une au moins première probabilité globale ($P_g$) de collision la plus proche possible voire égale au seuil de probabilité critique ($P_{th}$) de collision.

6. Procédé (100) selon l'une quelconque des revendications précédentes où les étapes (c), (d) et (e) sont répétées selon une pluralité de créneaux libres ($SI_1$, $SI_i$) de manoeuvres du satellite (10) de sorte à obtenir une seconde pluralité d'orbites ($X_{1i}$) alternatives et d'évaluer une seconde pluralité de probabilités globales ($P_g$) de collisions liée à la seconde pluralité d'orbites ($X_{1i}$) alternatives.

7. Procédé (100) selon l'une quelconque des revendications précédentes où l'étape (h) comprend une étape de : détermination (280) d'au moins une seconde manoeuvre de la commande (C) du satellite (10), la dite seconde maneouvre étant combinée à la première manoeuvre liée à la première probabilité globale ($P_g$) de collision la plus faible, l'au moins une seconde manoeuvre produisant une seconde orbite alternative ($X_2$) permettant le calcul d'une seconde probabilité de collision la plus faible selon les étapes du procédé (c) à (f).

8. Procédé (100) selon la revendication précédente pour lesquelles la détermination de la seconde manoeuvre de la commande (C) du satellite (10), comporte les étapes (a) et (b) du procédé (100) selon lesquelles la trajectoire de référence du satellite (10) est la trajectoire de la première orbite ($X_{1i}$) alternative du satellite liée à la première probabilité globale ($P_g$) de collision la plus faible.

9. Produit programme d'ordinateur comprenant des instructions qui, lorsque le programme est exécuté par un ordinateur, conduisent celui-ci à mettre en oeuvre les étapes du procédé (100) selon l'une quelconque des revendications 1 à 8.

10. Support de stockage (406) d'informations stockant un programme d'ordinateur comprenant des instructions pour implémenter, par un processeur, le procédé (100) selon l'une quelconque des revendications 1 à 8, lorsque ledit programme est lu et exécuté par ledit processeur.

**Patentansprüche**

1. Verfahren (100) zur Einstellung der Umlaufbahn eines Satelliten (10), um ein Risiko einer Kollision mit einer Wolke aus Weltraummüll ($d_1$, di) zu begrenzen, wobei jedem Müllstück ($d_1$, $d_i$) ein Datum der nächsten Wegkreuzung ($TCA_1$, $TCA_i$) mit dem Satelliten (10) zugeordnet ist, wobei das Verfahren (100) die folgenden Schritte umfasst:

a. Bestimmen (110) einer Referenzumlaufbahn ($X_{ref}$) des Satelliten (10) von einem anfänglichen Zeitpunkt ($t_0$) bis zu dem Datum der nächsten Wegkreuzung ($TCA_1$, $TCA_i$), die am weitesten vom anfänglichen Zeitpunkt ($t_0$) entfernt ist;
b. Bestimmen (120) einer Ephemeride einer Zustandsübergangsmatrix ($\varphi(t,t_0)$), die die Referenzumlaufbahn ($X_{ref}$) des Satelliten (10) darstellt;

14

c. Propagieren (130), gemäß der bestimmten Ephemeride der Zustandsübergangsmatrix ($\varphi(t,t_0)$), mindestens einer ersten alternativen Umlaufbahn ($X_{1i}$) der Referenzumlaufbahn ($X_{ref}$) des Satelliten (10) gemäß mindestens einem ersten Ausweichmanöver ($\Delta V.\vec{d}$) in Bezug auf den Satelliten (10), das während mindestens eines freien Zeitfensters für ein Manöver ($SI_1$) und von mindestens einem Manöverzeitpunkt ($t\_SI_1$) des mindestens einen freien Zeitfensters für ein Manöver ($SI_i$) bis zum Datum der nächsten Wegkreuzung ($TCA_i$), das am weitesten vom anfänglichen Zeitpunkt ($t_0$) entfernt ist, durchgeführt wird;

d. analytisches Bestimmen (140) einer einzelnen Kollisionswahrscheinlichkeit ($P_i$) an jedem Datum der nächsten Wegkreuzung ($TCA_1$, $TCA_i$) für jedes Müllstück ($d_1$, $d_i$) gemäß der mindestens einen ersten alternativen Umlaufbahn ($X_{1i}$) des Satelliten (10);

e. Bestimmen (150) mindestens einer allgemeinen Kollisionswahrscheinlichkeit ($P_g$) gemäß allen einzelnen Kollisionswahrscheinlichkeiten ($P_i$), die gemäß der mindestens einen ersten alternativen Umlaufbahn ($X_{1i}$) des Satelliten (10) in Bezug auf das mindestens eine erste Ausweichmanöver ($\Delta V.\vec{d}$) bestimmt wurden;

f. Auswählen (160) mindestens einer ersten niedrigsten allgemeinen Kollisionswahrscheinlichkeit ($P_g$) aus der mindestens einen allgemeinen Wahrscheinlichkeit ($P_g$), die gemäß Schritt (e) erhalten wurde;

h. Bestimmen (180) eines Befehls (C) des Satelliten (10), der mindestens das erste Manöver in Bezug auf die ausgewählte erste niedrigste allgemeine Kollisionswahrscheinlichkeit ($P_g$) umfasst.

2. Verfahren (100) nach Anspruch 1, wobei das Bestimmen einer Referenzumlaufbahn ($X_{ref}$) des Satelliten (10) anhand einer freien Driftausbreitung der Umlaufbahn ($X_{ref}$) des Satelliten (10) bestimmt wird.

3. Verfahren (100) nach einem der vorhergehenden Ansprüche, wobei die Schritte (c), (d) und (e) entlang einer Vielzahl von Richtungen ($\vec{d}$) des mindestens einen ersten Ausweichmanövers ($\Delta V.\vec{d}$) iterativ (190) wiederholt werden, um eine erste Vielzahl von alternativen Umlaufbahnen ($X_{1i}$) in Bezug auf eine erste Vielzahl von Ausweichmanövern ($\Delta V.\vec{d}$)$_{zu}$ erhalten und eine erste Vielzahl von allgemeinen Kollisionswahrscheinlichkeit ($P_g$) in Bezug auf jede der alternativen Umlaufbahnen in Bezug auf die erste Vielzahl von Ausweichmanövern ($\Delta V.\vec{d}$) auszuwerten.

4. Verfahren (100) nach einem der vorhergehenden Ansprüche, wobei jedes Ausweichmanöver ($\Delta V.\vec{d}$) einen Anfangswert der maximalen Geschwindigkeitsschwankung ($\Delta Vmax$) umfasst, die während des Ausweichmanövers ($\Delta V.\vec{d}$) zulässig ist.

5. Verfahren (100) nach einem der vorhergehenden Ansprüche, das ferner einen Schritt (g) vor dem Schritt (h) umfasst, der eine Einstellung (170) der Geschwindigkeitsschwankung ($\Delta V$) des mindestens einen ersten Ausweichmanövers ($\Delta V.\vec{d}$) des Befehls (C) umfasst, wenn die mindestens eine erste niedrigste allgemeine Wahrscheinlichkeit ($P_g$), die in Schritt (f) ausgewählt wird, kleiner ist als ein kritischer Kollisionswahrscheinlichkeitsschwellenwert ($P_{th}$), um mindestens eine erste Gesamtkollisionswahrscheinlichkeit ($P_g$) zu erhalten, die möglichst nahe an oder gleich dem kritischen Kollisionswahrscheinlichkeitsschwellenwert ($P_{th}$) liegt.

6. Verfahren (100) nach einem der vorhergehenden Ansprüche, wobei die Schritte (c), (d) und (e) gemäß einer Vielzahl von freien Zeitfenstern ($SI_1$, $SI_i$) für Manöver des Satelliten (10) wiederholt werden, um eine zweite Vielzahl von alternativen Umlaufbahnen ($X_{1i}$) zu erhalten und eine zweite Vielzahl von allgemeinen Kollisionswahrscheinlichkeiten ($P_g$) in Bezug auf die zweite Vielzahl von alternativen Umlaufbahnen ($X_{1i}$) auszuwerten.

7. Verfahren (100) nach einem der vorhergehenden Ansprüche, wobei der Schritt (h) folgenden Schritt umfasst: Bestimmen (280) mindestens eines zweiten Manövers der Steuerung (C) des Satelliten (10), wobei das zweite Manöver mit dem ersten Manöver in Bezug auf die erste niedrigste allgemeine Kollisionswahrscheinlichkeit ($P_g$) kombiniert wird, wobei das mindestens eine zweite Manöver eine zweite alternative Umlaufbahn ($X_2$) erzeugt, die das Berechnen einer zweitniedrigsten Kollisionswahrscheinlichkeit gemäß den Schritten (c) bis (f) des Verfahrens ermöglicht.

8. Verfahren (100) nach einem der vorhergehenden Ansprüche, wobei das Bestimmen des zweiten Manövers des Satelliten der Steuerung (C) des Satelliten (10) die Schritte (a) und (b) des Verfahrens (100) umfasst, nach denen die Referenzflugbahn des Satelliten (10) die Flugbahn der ersten alternativen Umlaufbahn ($X_{1i}$) des Satelliten in Bezug auf die erste niedrigste allgemeine Kollisionswahrscheinlichkeit ($P_g$) ist.

9. Computerprogrammprodukt, das Anweisungen umfasst, die, wenn das Programm von einem Computer ausgeführt wird, diesen dazu veranlassen, die Schritte des Verfahrens (100) nach einem der Ansprüche 1 bis 8 durchzuführen.

10. Informationsspeichermedium (406), das ein Computerprogramm speichert, das die Anweisungen zum Implementieren des Verfahrens (100) nach einem der Ansprüche 1 bis 8 durch einen Prozessor umfasst, wenn das Programm vom Prozessor gelesen und ausgeführt wird.

**Claims**

1. A method (100) for adjusting the orbital path of a satellite (10) to limit a risk of collision with a cloud of space debris ($d_1$, $d_i$), each piece of debris ($d_1$, $d_i$) including a date of closest passage ($TCA_1$, $TCA_i$) with the satellite (10), the method (100) including the steps of:

   (a) determining (110) a reference path of the orbit ($X_{ref}$) of the satellite (10) from an initial time instant ($t_0$) until the date of closest passage ($TCA_1$, $TCA_i$) furthest from the initial time instant ($t_0$);
   (b) determining (120) an ephemeris of state transition matrix ($\varphi(t, t_0)$) representative of the reference path of the orbit ($X_{ref}$) of the satellite (10);
   (c) propagating (130), according to the determined ephemeris of the state transition matrix $\varphi(t, t_0)$, at least one first alternative orbit ($X_{1i}$) of the reference orbit ($X_{ref}$) of the satellite (10) according to at least one first avoidance manoeuvre ($\Delta V.\vec{d}$) related to the satellite (10) performed during at least one free manoeuvre time slot ($SI_1$), and from at least one manoeuvre time instant ($t\_SI_1$) of the at least one free manoeuvre time slot ($SI_1$) until the date of closest passage ($TCA_i$) furthest from the initial time instant ($t_0$);
   (d) analytically determining (140) an individual probability ($P_i$) of collision on each date of closest passage ($TCA_1$, $TCA_i$) for each piece of debris ($d_1$, $d_i$) according to the at least one first alternative orbit ($X_{1i}$) of the satellite (10);
   (e) determining (150) at least one overall probability ($P_g$) of collision according to all the individual probabilities ($P_i$) of collision determined according to the at least one first alternative orbit ($X_{1i}$) of the satellite (10) related to the at least one first avoidance manoeuvre ($\Delta V.\vec{d}$);
   (f) selecting (160) at least one first lowest overall probability ($P_g$) of collision among the at least one overall probability ($P_g$) obtained according to step (e) ;
   (h) determining (180) a command (C) of the satellite (10) including at least the first manoeuvre related to the selected first lowest overall probability ($P_g$) of collision.

2. The method (100) according to claim 1, **characterised in that** determining a reference path of the orbit ($X_{ref}$) of the satellite (10) is determined according to a free drift propagation of the orbit ($X_{ref}$) of the satellite (10).

3. The method (100) according to any one of the preceding claims, **characterised in that** steps (c), (d) and (e) are iteratively repeated (190) along a plurality of directions ($\vec{d}$) of the at least one first avoidance manoeuvre ($\Delta V.\vec{d}$) so as to obtain a first plurality of alternative orbits ($X_{1i}$) related to a first plurality of avoidance manoeuvres ($\Delta V.\vec{d}$) and to evaluate a first plurality of overall probabilities ($P_g$) of collision related to each of the alternative orbits related to the first plurality of avoidance manoeuvres ($\Delta V.\vec{d}$).

4. The method (100) according to any one of the preceding claims, **characterised in that** each avoidance manoeuvre ($\Delta V.\vec{d}$) comprises an initial value of maximum velocity variation ($\Delta Vmax$) allowed during the avoidance manoeuvre ($\Delta V.\vec{d}$).

5. The method (100) according to any one of the preceding claims, **characterised in that** it comprises a step (g), preceding step (h), comprising an adjustment (170) of the velocity variation ($\Delta V$) of the at least one first avoidance manoeuvre ($\Delta V.\vec{d}$) of the command (C) when the at least one first lowest overall probability ($P_g$) selected in step (f) is less than a critical probability threshold ($P_{th}$) of collision, so as to obtain at least one first overall probability ($P_g$) of collision as close as possible to or equal to the critical probability threshold ($P_{th}$) of collision.

6. The method (100) according to any one of the preceding claims, **characterised in that** steps (c), (d) and (e) are repeated according to a plurality of free manoeuvre slots ($SI_1$, $SI_i$) of the satellite (10) so as to obtain a second plurality of alternative orbits ($X_{1i}$) and to evaluate a second plurality of overall probabilities ($P_g$) of collision related to the second plurality of alternative orbits ($X_{1i}$).

7. The method (100) according to any one of the preceding claims, **characterised in that** step (h) comprises a step of: determining (280) at least one second manoeuvre of the command (C) of the satellite (10), said second manoeuvre being combined with the first manoeuvre related to the first lowest overall probability ($P_g$) of collision, the at least one second manoeuvre producing a second alternative orbit ($X_2$) enabling the calculation of a second lowest probability of collision according to the steps (c) to (f) of the method.

8. The method (100) according to the preceding claim, wherein determining the second manoeuvre of the command (C) of the satellite (10), includes the steps (a) and (b) of the method (100) according to which the reference path of the satellite (10) is the path of the first alternative orbit ($X_{1i}$) of the satellite related to the first lowest overall probability ($P_g$) of collision.

9. A computer program product comprising instructions which, when the program is executed by a computer, cause the computer to implement the steps of the method (100) according to any one of claims 1 to 8.

10. An information storage medium (406) storing a computer program comprising instructions for implementing, by a processor, the method (100) according to any one of claims 1 to 8, when said program is read and executed by said processor.

[Fig. 1]

[Fig. 2]

[Fig. 3]

$$P_g = 1 - \prod_i (1 - P_i)$$

[Fig. 4]

$X_{ref}(t)$

$\Phi(t, t_0)$

$t_0$

$TCA_{last}$

[Fig. 5]

$X_{ref}$

10

$SI_1$

12

$SI_2$

16

14

[Fig. 6]

$\Delta V_{max1}.\vec{d_1}$   $\Delta V_{max2}.\vec{d_2}$   $\Delta V_{max3}.\vec{d_3}$   $\Delta V_{maxx}.\vec{d_4}$   $\Delta V_{maxi}.\vec{d_5}$

$SI_1$   $SI_2$   $SI_3$   $SI_x$   $SI_i$

[Fig. 7]

Fig. 6

[Fig. 8]

[Fig. 9]

[Fig. 10]

100

110

120

130

190 · 140 · 200

150

160

170

180

210

220

230

290 · 240 · 300

250

260

270

280

[Fig. 11]

400

402 — 404

406

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008033648 A1

- WO 2013169309 A2

**Littérature non-brevet citée dans la description**

- An analytic method of space debris cloud évolution and its collision évaluation for constellation satellites. **ZHANG BINBIN et al.** ADVANCES IN SPACE RESEARCH. ELSEVIER, vol. 58, 16-206